# EUROPEAN PATENT APPLICATION

(11) **EP 4 618 337 A1**
(43) Date of publication of application: **17.09.2025**
(21) Application number: 25162806.1
(22) Date of filing: 11.03.2025
(51) Int. Cl.: H02G 3/36

(54) **A WIRE FIXATION CLIP**

(30) Priority: 11.03.2024 DK PA202430111
(71) Applicant: DuoClips ApS, 2860 Søborg (DK)
(72) Inventor: Beck, Nicolai Buus, 2860 Søborg (DK)
(74) Representative: Larsen & Birkeholm A/S

(57) **Abstract**

A clip for fastening wires in grooves, which clip comprises an elastic thread forming a flexible periphery encircling the geometric center of the clip and thereby defining a plane, which flexible periphery comprises at least four deformation regions each of which being elastically deformable by forces, that presses on the flexible periphery in a direction parallel to the plane.

## Description

This patent application relates to a wire fixation clip for cable management practices.

In the realm of electrical engineering, effective cable management is paramount to the safety, reliability, and longevity of electrical systems. Proper fixation of wires, cables, or conduits not only ensures efficient routing and organization but also minimizes the risk of damage, interference, and safety hazards. Wire fixation clips have long been utilized as a fundamental component in cable management, providing a means to secure wires within grooves, channels, or designated pathways.

Conventional wire fixation clips typically involve the manual insertion of clips into grooves or channels after laying the wires-a process that can be labor-intensive and time-consuming, particularly in large-scale installations. Moreover, traditional clips may not always deliver optimal fixation, leading to potential movement, sagging, or dislodgement of wires over time.

The wires are usually covered by a layer of cement or mortar after they are laid in the groove. However, in the period until the lines are covered with hardened cement, the lines need to be fixed in the milled grooves so that they do not shift or fall out of the grooves (e.g. in the case of grooves in ceilings). In this application, the word "wires" does not mean soft wires or, for that matter, hard wires, wires can also be pipes in which there are actual electrical wires. In today's technology, this is done by using clips as described in the Chinese patent document with number: CN217159171 U or in the European patent document with number: EP1498651 A3. Both of these documents describe how to fix conduits in wall grooves with a clip having spring-elastic pre-curved leg section with two opposite ends.

Other known methods/clips involve the use of nails to fix the clip with wire. They are time consuming and/or involve the use of custom clips that only fit grooves of a given thickness/cross section.

It is an object of the invention to solve problems associated with prior art clips and to streamline the wire fixation process.

This is achieved in that the clip comprises an elastic thread forming a flexible periphery encircling the geometric center of the clip and thereby defining a plane, which flexible periphery comprises at least four deformation regions each of which being elastically deformable by forces, that presses on the flexible periphery in a direction parallel to the plane.

By providing the clip according to the invention with deformation regions being constructed for plastic deformation and in which the clip is deformed by pressing on the periphery, these deformation regions can be reinforced/made such that the risk of permanent deformations in these or other places on the clip is minimized, thereby also minimizes the risk of an installed clip not being stuck in the groove installed in.

**In** an embodiment of the invention, the deformation regions each include means for anchoring the clip in the groove.

**In** an embodiment of the invention, the clip is constructed so that its geometrical extent in the direction of its longitudinal center axis S is longer than its geometrical extent in the direction of the transverse center axis S.

By making the deformation zone so that they also function as anchoring points, the risk of placed clips falling. It is particularly an advantage if the clip when the clip is constructed in such a way that there is a difference between its extent in longitudinal direction and transverse direction. Such made clips may otherwise tend to rotate towards a position where it is pressed (deformed) least and in such a position it may even loos its ability to engage with the side walls in the groove.

Other embodiments of the invention are recited in the dependent claims.

**In** this application, the word "wires" does not mean soft wires or, for that matter, hard wires, wires can also be pipes in which there are actual electrical wires and the words: wires and cables are to be interpreted as being the same.

An embodiment of the invention will now be described with reference to the figure, in which:

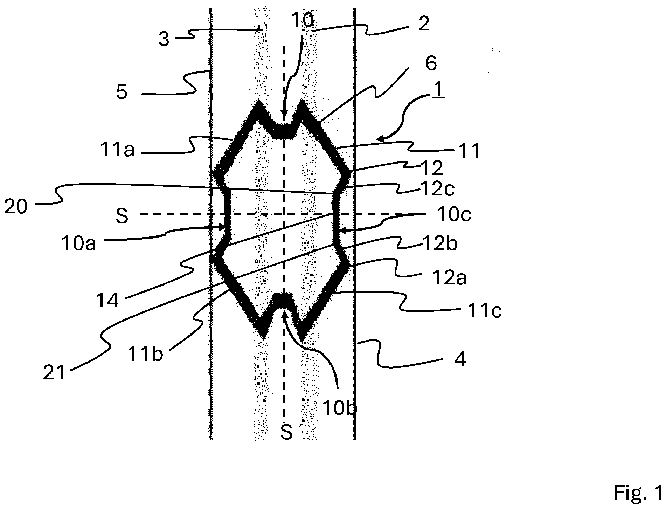

Figure 1 shows a clip according to an embodiment of the invention, the clip is placed above wires in a groove.

In the figure, the groove is formed by the two walls 4 and 5 and normally grooves in which cables/wires are to be inserted are formed by milling.

The wires are usually covered by a layer of cement or mortar after they are laid in a groove. However, in the period until the wires are covered with hardened cement, the wires need to be fixed in the grooves so that they do not shift positions, twingles or fall out of the grooves (e.g. in the case of grooves in ceilings).

The clip shown in fig. 1 may be used in a wide range of different grooves with varied thickness/cross-section. The clip is constructed as an essentially flat item defining a plane and the clip mainly consists of an elastic wire/thread 6, which forms the periphery of the clip.

In the embodiment shown, the periphery comprises four deformation regions 10, 10a, 10b and 10c which are separated by four pieces of essentially straight wire 11, 11a, 11b and 11c. The four deformation regions are each formed by the wire being bent such that it forms a concave part that curves convexly towards the geometric center (center of gravity) of the clip, which in the embodiment shown lies approximately where the two symmetry axes S and S' meet/cross. As can be seen in the figure, the clip rests (rests on) at four points against the walls of the groove, namely in the four corners/points 12, 12 a, 20, 21 p. The fact that the clip rests on four points that appear two by two in the deformation regions is an advantage, as the clip is thus prevented against rotation.

The deformation regions are thus constructed so that they not only functions as deformation regions but also function as anchoring points. By making the deformation regions so that they also function as anchoring points, the risk of placed clips shifting position or even falls out of a groove is thus minimized.

The providing of anchoring means on a clip is particularly an advantage if the clip is constructed in such a way that there is a difference between its extent in longitudinal direction and transverse direction, In these embodiments the clip may otherwise tend to rotate towards a position where it is pressed (deformed) the least.

In the embodiment shown in figure 1, the clips anchoring properties are achieved by the deformation regions being constructed so that each deformation region includes two corners which grips firmly against the sides of the groove, however, the anchoring capability of a clip can also be done in other ways, e.g. by providing the periphery with one or more spikes/tips/edges that are pressed against the walls in a groove when the clip is placed in the groove under deformation.

However, by making the clip so that the deformation regions themselves also form the anchoring means that lock the clip firmly, not only is a secure anchoring achieved, but also a product that is easy to install, as the installer only has to mount the clip with the corners of the clip placed against the inside of a groove. Furthermore, the clip itself is also uncomplicated to manufacture, as the anchoring means are made up of the wire/wire, which in areas of the periphery is simply bent so that corners are formed.

Normally, a clip according to the invention comprises four essentially identical deformation regions 10, 10a, 10b, and 10c, which also function as an anchor, and in the following it will be explained how such a deformation region can be constructed.

In Figure 1, the deformation region on the right side of the clip is thus provided with reference numbers that point to the individual parts of this deformation region, which include two corners 12, 12a that are anchored against the wall 4 of the groove.

The corners 12 and 12a connect 2 straight pieces 11 and 11c, which lie respectively between the deformation regions 10 and 10c and the deformation regions 10c and 10b with two other, essentially straight pieces 12b, 12c running from the corners 12 and 12a towards the interior of the clip. These two straight pieces 12b and 12c run to two other corners 20,21, which are connected by an essentially straight piece 14, which forms the part of the deformation region 10c that is closest to the geometric center of the clip. In the embodiment shown, sharp corners are used, but the deformation regions can also be made so that they are made up of softer transitions to concave arcs that have their convex side on the side that, seen in the surface plane, is closest to the geometric center of the clip or with others: arches with a convex side on the inside of the periphery. In other embodiments of the invention, one or more of the deformation regions can be made with a different strength than the rest of the clip's periphery is deformed and typically this strength will be increased in relation to the rest of the periphery, as the deformation region may otherwise be too weak. The strength of the individual deformation regions can also be varied, just as the size of them can also be varied, also individually. Figure 1 shows that the clip 1 has approximately the same extent in both the longitudinal axis S' and in the transverse axis S direction, but this will not normally be the case as a difference in extent in the longitudinal direction compared to the transverse direction means that the clip can be used in grooves of different cross-section as it is inserted (turned) so that the extent of the clip in the transverse or longitudinal direction best matches the cross-section of the groove and this size ratio between the extent of the clip in resp. transverse direction and longitudinal direction can of course be varied in any embodiment of the clip. Normally, the clip will be made so that it is provided with 4 equal deformation regions distributed with 90 degree displacement and normally the deformation regions will be located in such a way that two deformation regions lie on the longitudinal axis of the clip, while the other two lie on the cross axis of the clip. If the clip is made with 4 deformation regions, two of which lie on the longitudinal axis of the clip and the other two on the transverse axis of the clip, then the clip can advantageously be designed so that the two deformation regions that lie on the longitudinal axis of the clip are reinforced in relation to the two deformation regions that lies on the transverse axis of the clip. This achieves - especially when the extension of the clip is longer in the longitudinal direction than in the transverse direction - a more uniform elasticity in the length and transverse direction of the clip. This is an advantage if the clip is used in grooves with varying cross-sections, as it provides uniform assembly. In one embodiment of the invention, the clip is provided with more than 4 deformation regions, each of which also includes means so that they also function as anchors. Typically, the number will be a multiple of 2 and the clip can in these embodiments be constructed such that any deformation regions/anchorage geometrically lies opposite another complementary deformation regions/anchorage and the distance between the complementary deformation regions/anchorages can vary so that the clip's can be adapted (by turning this in the groove around an axis vertical to the flat plane of the clip) better for grooves with different cross-sections.

In one embodiment, the deformation regions are adapted so that a tool - such as e.g. a conventional plier or a lock ring plier - can engage into the deformation zone and hold the clip here while the clip is being springily pressed together and guided into a groove, and the deformation regions are also dimensioned so that the tool can disengage from the clip again when the clip is mounted in the groove as the deformation regions are also preferably adapted so that the tips of the plier can be guided out of the deformation regions while the clip's deformation regions are engaged with the walls of the groove. This embodiment of the clip can be utilized in all described embodiments of the invention.

## Claims

1. A clip for fastening wires in grooves, which clip comprises an elastic thread forming a flexible periphery encircling the geometric center of the clip and thereby defining a plane, which flexible periphery comprises at least four deformation regions each of which being elastically deformable by forces, that presses on the flexible periphery in a direction parallel to the plane.

2. A clip according to claim 1, **characterized in that** the deformation regions each include means for anchoring the clip in the groove.

3. A clip according to claim 1 or 2, **characterized in, that** the deformation regions each comprise two bends that form an anchoring point and a concave area that curves convexly towards the geometric centre of the clip.

4. A clip according to claim 1-3, **characterized in, that** the clip comprises eight deformation regions, each of which forms an anchoring point and a concave area that curves convexly towards the geometric centre of the clip.

5. A clip according to any of the preceding claims, **characterized in that** the clip is constructed symmetrically about a longitudinal center axis.

6. A clip according to any of the preceding claims, **characterized in that** the clip is constructed symmetrically around a transverse central central axis.

7. A clip according to any of the preceding claims, **characterized in that** the clip is constructed so that its geometrical extent in the direction of its longitudinal center axis S is longer than its geometrical extent in the direction of the transverse center axis S.

8. A clip according to any of the preceding claims, **characterized in that** the thread is thicker and/or stronger in the deformation regions than in the other parts of the periphery.

9. A clip according to any of the preceding claims, **characterized in that** the thread is thinner and/or weaker in the deformation regions than in other parts of the periphery.
